# EUROPÄISCHE PATENTSCHRIFT

(11) **EP 0 536 358 B1**
(45) Veröffentlichungstag und Bekanntmachung des Hinweises auf die Patenterteilung: **13.09.1995**
(21) Anmeldenummer: 92908421.8
(22) Anmeldetag: 22.04.1992
(51) Int. Cl.: A47L 1/06

(54) **VORRICHTUNG ZUM REINIGEN DER INNENFLÄCHEN DER FRONT- UND HECKSCHEIBEN VON AUTOS**
DEVICE FOR CLEANING THE INNER SURFACES OF THE FRONT AND REAR WINDOWS OF AUTOMOBILES
DISPOSITIF DE NETTOYAGE DES SURFACES INTERNES DU PARE-BRISE ET DE LA VITRE ARRIERE DES VOITURES

(30) Priorität: 24.04.1991 CH 1231/91
(43) Veröffentlichungstag der Anmeldung: 14.04.1993
(73) Patentinhaber: STRANDERS, Rolf, CH-8102 Oberengstringen (CH)
(72) Erfinder: STRANDERS, Rolf, CH-8102 Oberengstringen (CH)
(74) Vertreter: Feldmann, Clarence Paul
(86) Internationale Anmeldenummer: CH9200077
(87) Internationale Veröffentlichungsnummer: WO9219142

(56) Entgegenhaltungen:
- WO-A-89/12419
- DE-A- 2 645 188
- DE-A- 3 108 023
- DE-U- 8 709 765
- DE-U- 9 000 477
- NL-A- 8 601 378
- US-A- 3 649 987
- US-A- 4 685 167
- US-A- 4 845 800
- US-A- 4 852 210

## Beschreibung

Es sind zahlreiche Schaber und Wischer zum Reinigen der Aussenflächen der Autoscheiben bekannt. Diese bestehen aus einem Griff und einem damit meist starr verbundenen Reinigungsteil, beispielsweise ein Schaber, Wischerblatt oder Schaumgummistreifen, beziehungsweise auch Kombinationen hiervon.
Meist müssen solche Reinigungsvorrichtungen geeignet sein, um auf der Scheibenaussenfläche klebende Verunreinigungen unter mechanischer Krafteinwirkung entfernt werden zu können, sowie anschliessend die gereinigte nasse Scheibe zu trocknen. Entsprechend muss über den Stiel eine gezielte Krafteinwirkung auf den Reinigungsteil möglich sein, um eine gezielte Schabwirkung erreichen zu können. Aus diesen Ueberlegungen heraus, hat man die Verbindung zwischen Stiel und Reinigungsteil bewusst starr angeordnet.

Beispielsweise beschreibt US A-3649987 (D2) ein Abwischgerät zum Reinigen von Autoscheiben, welches einen flexiblen an einem Haltegriff angeordneten Wischer umfasst. Der Wischer besteht aus einer Halterung mit einem nach unten einwärts gerichteten, keilförmigen oder gerundeten Querschnitt. Es handelt sich im Prinzip und einen Scheibenwischer, wie er für die Aussenflächen von gewölbten Autoscheiben benützt wird. Die Aufhängung der Halterung ist auch gleich. Dadurch ist die Auflagefläche des Wischblattes minimal. dies bedingt, dass der Haltegriff parallel zum Wischblatt sein muss. Eine Autoscheibe wird mit Reinigungsflüssigkeit und Lappen oder Schwamm gereinigt, worauf mit diesem Abwischgerät die Reinigungsflüssigkeit von der gereinigten Autoscheibe abgestreift wird, um diese besser trocknen zu lassen. Die Auslegung mit dem flexiblen Wischblatt und der Aufhängung an zwei beabstandeten Schwenkpunkten erlaubt sowohl ein konkaves, wie konvexes durchbiegen des Wischblattes. Ein sauberes Abwischen von Reinigungsflüssigkeit wird dadurch gefördert, dass das Wischblatt sich etwas entgegen der Bewegungsrichtung neigt, wie dies von den Scheibenwischern her bekannt ist.
Aus DE-U-9000477 ist Bodennasswischgerät mit einer rechteckigen, flachen Grundplatte und einem damit beweglich verbundenen Stil bekannt. die Grundplatte ist an der Unterseite mit Klettmaterial versehen zum lösbaren Befestigen eines Nasswischstripes.

All diese Ueberlegungen haben bei der Reinigung der Autoscheiben-Innenflächen keine Gültigkeit. Hier wird kein hoher punktueller oder linearer Druck benötigt, sondern ein flächiger, gleichmässiger, aber geringer Druck. Entsprechend sollte der Reinigungsteil in sich nicht starr, sondern biegsam und die Verbindung zwischen Stiel und Reinigungsteil soll möglichst beweglich sein. Nur so kann die konkav geformten und äusserst schlecht zugänglichen Innenflächen der Autoscheiben gereinigt werden.
Auf Grund obiger Ueberlegungen und Erfahrungen wurde eine Vorrichtung gemäss Oberbegriff des Patentanspruches entwickelt, der die Nachteile bekannter Vorrichtungen beseitigt und speziell für die Anwendung zur Reinigung der Autoscheiben-Innenflächen geeignet ist. Eine derartige Vorrichtung zeichnet sich aus durch die Merkmale des kennzeichnenden Teil des Patentanspruches 1.
Durch diese Anordnung wird einerseits die freie Einstellbarkeit der Neigungslage des Reinigungsteiles zum Griff gewährleistet, jedoch die Drehlage des Reinigungsteiles bezüglich der Längsachse des Griffes beibehalten.
Um eine möglichst gleichmässige, flächige Reinigung der Autoscheiben-Innenfläche zu erreichen, hat es sich ferner als besonders vorteilhaft erwiesen, wenn man den Reinigungsteil gemäss den Merkmalen des abhängigen Patentanspruches 2 ausgestaltet.

Weitere vorteilhafte Ausgestaltungsformen des Erfindungsgegenstandes gehen aus den weiteren abhängigen Patentansprüchen hervor und sind in der nachfolgenden Beschreibung unter Bezug auf die beiliegenden Zeichnungen erläutert. Es zeigt:
- Figur 1: eine perspektivische Darstellung der gesamten Vorrichtung;
- Figur 2: die Gelenkverbindung zwischen Reinigungsplatte und Stiel im Detail und
- Figur 3: eine perspektivische Darstellung einer Reinigungsplatte zur Befestigung eines Reinigungstuches.

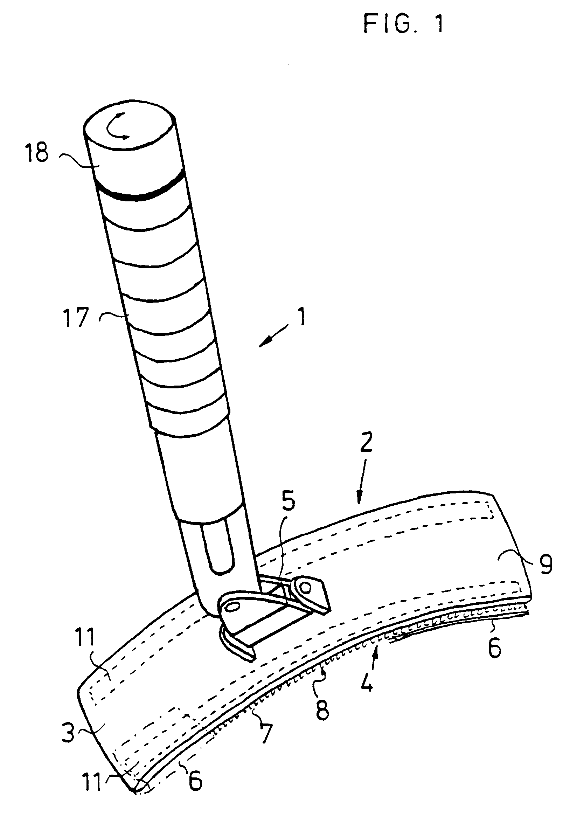

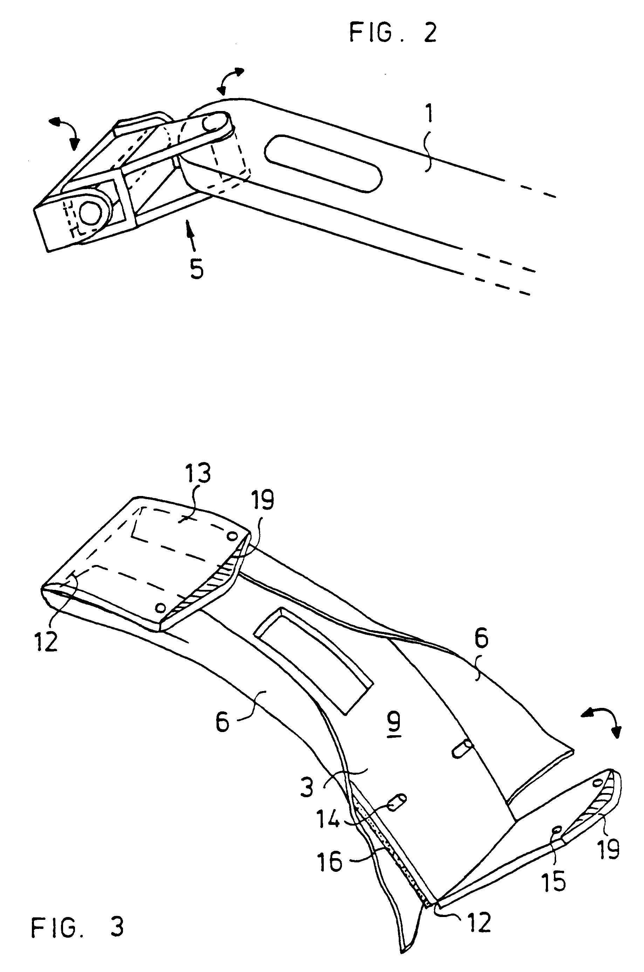

Die vorliegende Vorrichtung zum Reinigen der Innenflächen der Front- und Heckscheiben von Autos besteht im wesentlichen aus zwei Teilen, nämlich einem Griff 1 und einem Reinigungsteil 2, die über ein Kreuzgelenk 5 miteinander beweglich verbunden sind. Der Reinigungsteil 2 umfasst eine Platte 3, sowie Mittel 4 zur lösbaren Befestigung eines Reinigungstuches und das Reinigungstuch 6 selber. Insbesondere für die Reinigung der Frontscheibe ist es wesentlich, dass der Fahrer mit der erfindungsgemässen Vorrichtung dieselbe schnell und sauber reinigen kann. Für die Sauberkeit ist durch die Auswechselbarkeit der Reinigungstücher 6 gesorgt. Für die schnelle Reinigung ist es wesentlich, dass der Reinigungsteil 2 begrenzt beweglich mit dem Griff 1 verbunden ist. Diese begrenzte Beweglichkeit wird mittels dem Kreuzgelenk 5 erreicht. Die begrenzte Beweglichkeit führt dazu, dass sich die Platte 3 an jede Neigung der Frontscheibe anpassen kann, jedoch nicht beliebig um die Längsachse des Griffes 1 sich drehen kann. Nur so ist garantiert, dass bei der Reinigung der Frontscheibe auch die gesamte Länge der Platte 3 ausgenutzt werden kann. Die Platte 3 hat beispielsweise die Länge von etwa 20cm und eine Breite von ungefähr 7cm. Sie lässt sich aus einer Polypropylen nach dem bekannten Spritzgussverfahren herstellen. Vorzugsweise wird man das Kreuzgelenk 5 direkt an der Platte 3 anspritzen. Diese Version ist in der Figur 1 dargestellt. Es ist jedoch ebenfalls möglich, die Platte für sich allein zu fertigen und den Griff 1 mit dem Kreuzgelenk 5 zusammensteckbar zu gestalten, wie dies die Figuren 2 und 3 zeigen.
Die Mittel 4 zur lösbaren Befestigung eines Reinigungstuches 6 können sehr vielgestaltig ausgeformt sein. In der Figur 1 ist als eine erste Version die Möglichkeit dargestellt, dass die Anlagefläche 8 der Platte 3 über mindestens annähernd der gesamten Fläche mit Haken 7, wie sie vom Krallenteil eines Klettbandverschlusses bekannt sind, versehen ist. Diese Haken 7 lassen sich einstückig mit der Platte 3 realisieren, in dem man die entsprechende Spritzgussform mittels Funkenerosion fertigt. Es kann aber auch die feste Anlagefläche 8 der Platte 3 mit einem entsprechenden Klettbandteil ganzflächig beklebt sein. In diesem Fall wird man vorzugsweise Reinigungstüchlein 6 verwenden, die masslich exakt mit der Grösse der Platte 3 übereinstimmen.
Eine Variante hierzu besteht darin, dass man lediglich auf der Rückseite 9 der Platte 3 entlang deren Längskanten Streifen 11 eines Klettbandteiles 10 aufklebt. Bei dieser Variante muss selbstverständlich das Reinigungstuch 6 breiter als die Breite der Platte 3 sein, damit es entsprechend umgeschlagen werden kann und so auf den Streifen 11 auf der Rückseite 9 der Platte 3 hält. Damit das Reinigungstuch auch wirklich an den Haken 7 haftet, muss dieses selbstverständlich auch eine entsprechende Struktur aufweisen. Vorzugsweise wird man daher als Reinigungstuch eines aus Non-Woven-Material verwenden. Derartige Reinigungstücher gibt es in diversen Ausführungsformen, insbesondere solche aus relativ flauschigem Material, die entsprechend saugfähig sind und im Handel als Wischtücher angeboten werden. Eine zweite Variante sind Tücher aus einem relativ dünnen Flies, welches bereits mit einem Reinigungsmittel getränkt ist. Verwendet man solche feuchtigkeitsgetränkte Tücher, so lassen sich diese im Griff 1 unterbringen, der als Aufnahmebehälter 17 konzipiert ist und mit einer Schraubkappe 18 verschliessbar ist.
Ist die Platte 3 ganzflächig mit Haken 7 auf der Anlagefläche 8 versehen, so wirken diese selber elastisch federnd, so dass eine entsprechende Anpassung an die Frontscheibe mittels den Haken 7 erfolgt. Sind jedoch diese Haken 7 auf der Rückseite 8 mittels den Streifen 11 angebracht, so fehlt diese elastische Anpassung. Daher ist es bei jenen Ausführungsformen erforderlich, dass die Anlagefläche 8 mittels einem Polstermaterial die erforderliche Elastizität erhält. Entsprechend wird man die Platte 3 dann vorzugsweise ganzflächig mit einem Schaumgummibelag 16 versehen. Dieser Schaumgummi 16 soll jedoch vorzugsweise nicht saugfähig sein. Entsprechend kann dieser Schaumgummi ein beispielsweise geschlossen-poriger Belag aus Polyurethanschaum sein.

Die Mittel 4 zur lösbaren Befestigung des Reinigungstuches 6 können aber auch völlig anderstartig gestaltet sein. Dies zeigt beispielsweise die Ausführung gemäss der Figur 3. Hier ist die Platte 3 auf ihrer Anlageseite mit dem vorgängig beschriebenen Schaumgummibelag 16 versehen. Hingegen erfolgt die Halterung des Reinigungstuches 6 mittels Klemmplatten 13. Die Klemmplatten 13 sind vorzugsweise einstückig mit der Platte 3 gefertigt und dessen Schmalseiten sind über Filmscharniere 12 schwenkbar mit der Platte 3 verbunden. Auf der Rückseite 9 der Platte 3 sind Nocken 14 angespritzt, die mit entsprechenden Bohrungen 15 in den Klemmplatten 13 zusammenpassen. Das Reinigungstuch 6 lässt sich somit über die Längskanten der Platte 3 schlagen und decken dabei die Nocken 14 ab. Hierauf schwenkt man die Klemmplatten 13 um und das Reinigungstuch 6 wird zwischen Klemmplatte 13 und der Platte 3 geklemmt und zusätzlich noch mittels den Nocken 14 und den Bohrungen 15 formschlüssig gehalten. Die Nocken 14 können selbstverständlich zusätzlich noch zugespitzt sein, damit das Reinigungstuch 6 entsprechend durch die Nocken 14 perforiert wird. Um nach Gebrauch das verschmutzte Reinigungstuch 6 wieder entfernen zu können, ist es vorteilhaft, wenn die Klemmplatte 13 jeweils ein aufgebogenes Ende 19 aufweist, welches als Grifflasche dient.
Ein besonders wesentlicher Punkt für die einwandfreie Reinigung der gewölbten Frontscheibe eines Autos ist die Anpassungsfähigkeit der Platte 3 an die entsprechende Form der Frontscheibe. Entgegen den Erwartungen wird dies nicht erreicht, in dem man der Platte 3 möglichst genau die Form der Frontscheibe anpasst, sondern diese entgegen der Wölbung der Frontscheibe gestaltet. Dies bedeutet, dass man die Anlagefläche 8 der Platte 3 so wölbt, dass sie eine konkave, zylindrische Biegung aufweist, dabei soll die Krümmungsachse mindestens annähernd senkrecht zur Plattenlängsachse verlaufen. Dies ergibt eine hohe Elastizität der Platte 3 und der Benützer spürt sogleich, ob er genügend Andruckkraft auf die Platte 3 ausübt. Die Anpassungsfähigkeit und die vollständige Anlage des Reinigungstuches 6 an die zu reinigenden Frontscheibe ist folglich nicht in erster Linie von der Dicke der Schaumgummibeschichtung 16 abhängig, sondern von der Flexibilität der Platte 3, die durch diese entsprechende Formgestaltung bewirkt wird. Diese Biegung ist in der Zeichnung der Deutlichkeit halber stark überhöht dargestellt. Vorzugsweise wird man diese Biegung etwa so gestalten, dass die mittige Durchbiegung der Platte etwa 3-6mm beträgt.

## Patentansprüche

1. Vorrichtung zum Reinigen der Innenflächen der Front- und Heckscheiben von Autos, mit an einem Griff (1) gelenkig verbundenen Reinigungsteil (2), **dadurch gekennzeichnet, dass** der Reinigungsteil (2) eine Platte (3) mit einer Anlagefläche (8) aus elastischem Material ist, welche Platte (3) so gewölbt ist, dass die Anlagefläche (8) eine konkave zylindrische Biegung hat, deren Krümmungsachse senkrecht zur Plattenlängsachse verläuft und dass die Platte (3) mit dem Griff (1) mittels einem Kreuzgelenk (5) verbunden ist.

2. Vorrichtung nach Anspruch 1, dadurch gekennzeichnet, dass Die Platte (3) mit einem Klettverschluss zum lösbaren Befestigen eines Reinigungstuches (6) an der Anlagefläche (8) versehen ist.

3. Vorrichtung nach Anspruch 1, dadurch gekennzeichnet, dass an den Breitseiten der Platte (3) über ein Filmscharnier (12) je eine schwenkbare Klemmplatte (13) angeordnet ist, die in der Klemmlage eine auswechselbares Reinigungstuch (6) form- und kraftschlüssig halten.

4. Vorrichtung nach Anspruch 3, dadurch gekennzeichnet, dass die Klemmplatten (13) Bohrungen (15) aufweisen, die mit Nocken (14) auf der Plattenrückseite (9) druckknopfartig zusammenwirken.

5. Vorrichtung nach Anspruch 3, dadurch gekennzeichnet, dass die Anlagefläche (8) der Platte (3) mit einem Schaumgummi (16) gepolstert ist.

6. Vorrichtung nach Anspruch 1, dadurch gekennzeichnet, dass der Griff (1) hohl und als Aufnahmebehältnis (17) für die auswechselbaren Reinigungstücher (6) ausgebildet ist.

## Claims

1. Device for cleaning the inner surfaces of the front and rear windows of automobiles, with a cleaning part (2) flexibly joined to a handle (1), characterised in that the cleaning part (2) comprises a plate (3) with a pressure surface (8) of elastic material, which plate (3) is so arched that the pressure surface (8) has a concave cylindrical curvature, the axis of curvature of which is perpendicular to the longitudinal axis of the plate, and in that the plate (3) is connected to the handle (1) by means of a universal joint (5).

2. Device according to Claim 1, characterised in that the plate (3) is provided with a hook-and-loop fastening medium for detachably fastening a cleaning cloth (6) to the pressure surface (8).

3. Device according to Claim 1, characterised in that a pivoted clamping plate (13) is attached to each of the short sides of the plate (3) by means of an integral hinge (12), which clamping plates securely hold a close-fitting replaceable cleaning cloth (6) when in the clamped position.

4. Device according to Claim 3, characterised in that the clamping plates (13) have holes (15) which engage with studs (14) on the reverse side (9) of the plate (3) in the manner of press fasteners.

5. Device according to Claim 3, characterised in that the pressure surface (8) of the plate (3) is lined with a foam rubber pad (16).

6. Device according to Claim 1, characterised in that the handle (1) is hollow and is formed as a container (17) for the replaceable cleaning cloths (6).

## Revendications

1. Dispositif de nettoyage des surfaces internes du pare-brise et de la lunette arrière des voitures, équipé d'une pièce pour le nettoyage (2) reliée de façon articulée à une poignée (1), caractérisé en ce que la pièce pour le nettoyage (2) est une plaque (3) avec une surface d'applique (8) à base de matériau élastique, laquelle plaque (3) est bombée de telle façon que la surface d'applique (8) ait une flexion cylindrique concave dont l'axe de courbure est perpendiculaire à l'axe longitudinal de la plaque et que la plaque (3) soit reliée à la poignée (1) au moyen d'une articulation à croisillon (5).

2. Dispositif selon la revendication 1, caractérisé en ce que la plaque (3) est munie d'une fermeture à accrochement pour la fixation amovible d'un chiffon de nettoyage (6) sur la surface d'applique (8).

3. Dispositif selon la revendication 1, caractérisé en ce que sur chacun des côtés larges de la plaque (3) est disposée, au-dessus d'une charnière à film (12) une plaque de serrage (13) pivotante qui maintient dans la position de serrage un chiffon de nettoyage (6) interchangeable, par conjugaison de forme et par adhérence.

4. Dispositif selon la revendication 3, caractérisé en ce que les plaques de serrage (13) ont des alésages (15) qui agissent de concert avec des cames (14) sur la face arrière de la plaque (9), à la façon d'un bouton-poussoir.

5. Dispositif selon la revendication 3, caractérisé en ce que la surface d'applique (8) de la plaque (3) est rembourrée avec un caoutchouc mousse (16).

6. Dispositif selon la revendication 1, caractérisé en ce que la poignée (1) est creuse et formée comme un récipient récepteur (17) pour les chiffons de nettoyage (6) interchangeables.
